# EUROPEAN PATENT SPECIFICATION

(11) **EP 3 634 822 B1**
(45) Date of publication and mention of the grant of the patent: **17.03.2021**
(21) Application number: 18733944.5
(22) Date of filing: 28.05.2018
(51) Int. Cl.: B60T 13/66, H04B 11/00

(54) **ACOUSTIC SYSTEM AND METHOD FOR THE TRACTION/BRAKING CONTROL OF A TRAIN**
AKUSTISCHES SYSTEM UND VERFAHREN FÜR ANTRIEBS- UND BREMSREGELUNG EINES SCHIENENFAHRZEUGS
SYSTEME ACOUSTIQUE ET PROCEDE DE CONTROLE DE TRACTION ET DE FREINAGE D'UN VEHICULE FERROVIAIRE

(30) Priority: 30.05.2017 IT 201700058879
(43) Date of publication of application: 15.04.2020
(73) Proprietor: Faiveley Transport Italia S.p.A., 10045 Piossasco (TO) (IT)
(72) Inventor: TIONE, Roberto, 10020 Lauriano (Torino) (IT)
(74) Representative: Deambrogi, Edgardo
(86) International application number: PCT/IB2018/053774
(87) International publication number: WO 2018/220506

(56) References cited:
- WO-A1-2017/025895
- DE-A1- 4 008 250
- US-A- 5 090 779
- US-A1- 2002 153 765

## Description

### Technical sector

The present invention is placed, in general, in the field of control systems of trains, particularly for the transport of goods, which comprise a plurality of locomotives.

In particular, the invention relates to an acoustic traction/braking control system of a train and a corresponding method.

### Prior Art

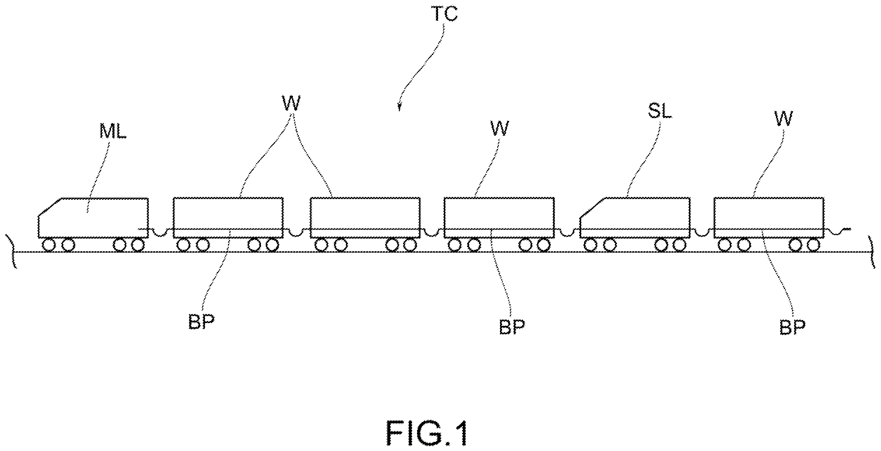

The "Distributed Power" technique born in the American "AAR" railway world is well known in the art. Such technique consists of distributing several locomotives along a train of exceptional length and weight, as shown in figure 1. Said locomotives distributed along the train are synchronized with each other by means of a radio control system: the first locomotive is called the master locomotive and replicates the traction or braking commands to the subsequent locomotives, called the slave locomotives, by means of said radio control system (not illustrated in figure 1).

The purpose of the "Distributed Power" system is to better distribute traction and braking forces along the train, significantly reducing longitudinal forces that could trigger processes of derailment.

An accurate description of the distributed power system and its benefits is contained in the patent WO2017025895, where the drawbacks of possible faults in the radio control system are also fully described and corrective solutions are claimed for operating the train in degraded conditions.

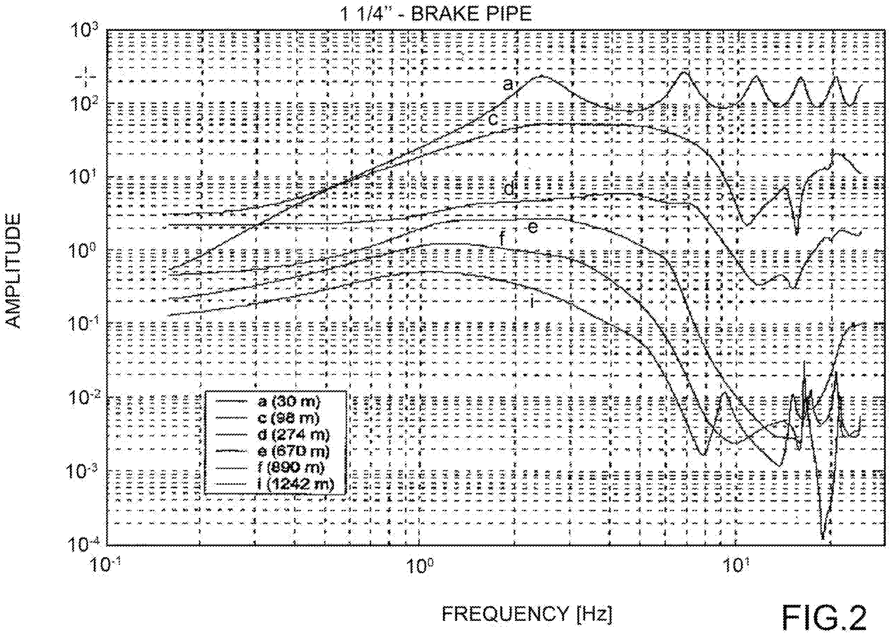

According to the report 100-002 "Sonar Transmission through the Train Brake System", Hans Sandholt, Bengt Schmidtbauer, reporting the results of tests carried out in collaboration between the Swedish institute CHARMEC and the company SAB-WABCO Italia, today Faiveley Transport Italia, it is possible to transmit waves at subsonic frequencies along the brake line of a train up to 1.5km long, at a maximum frequency between 5Hz and 10Hz. Figure 2 shows the Bode diagram of the amplitudes as the frequency varies for various train lengths, measured on a real system: for lengths less than 30m (curve "a" in figure 2), the usable band extends to frequencies on the order of tens of Hz, while for lengths greater than 1000m, the attenuation knee occurs already at 5Hz.

The patent US2002153765 claims the propagation of negative and positive pressure pulses along the brake line of a railway train to transmit traction or braking commands. According to such method, it is not possible to continuously modulate traction or braking commands.

### Summary of the invention

An object of the present invention is therefore to propose an acoustic system and method for the continuous traction/braking control of a train that allows an additional way of controlling a train.

Furthermore, the solution claimed in the present patent claims a further method, with respect to those already reported in WO2017025895, for controlling a train adopting Distributed Power technology, in the event of a fault in the radio control system.

The solution claimed in the present patent uses the propagation of acoustic waves inside the general pipe.

Such result is obtained by means of an acoustic system for the traction/braking control of a train comprising a general brake pipe, a master vehicle comprising traction and braking means, and at least one slave vehicle comprising traction and braking means.

The acoustic system for the traction/braking control of a train includes:
- a modulator device, associated with the master vehicle, which receives at least one traction or braking request signal and generates an electrical signal able to excite an actuator which transforms said electrical signal into a respective acoustic signal to be sent inside the general brake pipe; the frequency value of the acoustic signal being adjusted as a function of the amplitude value of the at least one traction or braking request signal, according to a predetermined trans-characteristic function;
- at least one transducer device associated with at least one slave vehicle, which detects the acoustic signal and converts the instantaneous amplitude value of the acoustic signal into an electrical signal the frequency value of which is adjusted according to the frequency of the acoustic signal;
- at least one frequency demodulator associated with said at least one slave vehicle, which generates a traction or braking management signal the amplitude value of which is adjusted according to the frequency of the electrical signal, the traction or braking management signal being transmitted by the frequency demodulator to a traction and braking management system associated with said at least one slave vehicle, provided for traction and braking management.

The aforesaid and other objects and advantages are achieved, according to an aspect of the invention, by an acoustic system and method for the control of traction/braking having the characteristics defined in claim 1. Preferential embodiments of the invention are defined in the dependent claims.

### Brief description of the figures

The functional and structural characteristics of some preferred embodiments of an acoustic traction/braking control system according to the invention will now be described. Reference is made to the accompanying drawings, wherein:
- figure 1 schematically illustrates a train having a plurality of vehicles, including a master vehicle and a slave vehicle;
- figure 2 illustrates a Bode diagram of the amplitudes as the frequency changes, as a function of various train lengths, measured on a real system;
- figure 3 schematically illustrates an acoustic traction/braking control system according to the invention;
- figure 4a illustrates a first example of modulation; and
- figure 4b illustrates a second example of modulation.

### Detailed Description

Before describing in detail a plurality of embodiments of the invention, it should be clarified that the invention is not limited in its application to the details of construction or to the configuration of the components provided in the following description or illustrated in the drawings. The invention may assume other embodiments and may be implemented or achieved in essentially different ways. It should also be understood that the phraseology and terminology have descriptive purposes and should not be construed as limiting. The use of "include" and "comprise" and their variations are to be understood as encompassing the elements stated hereinafter and the equivalents thereof, as well as additional elements and the equivalents thereof.

The present patent describes methodologies for the modulation of subsonic waves superposed at the pressure for transmitting information related to traction and braking commands along the brake line of a train.

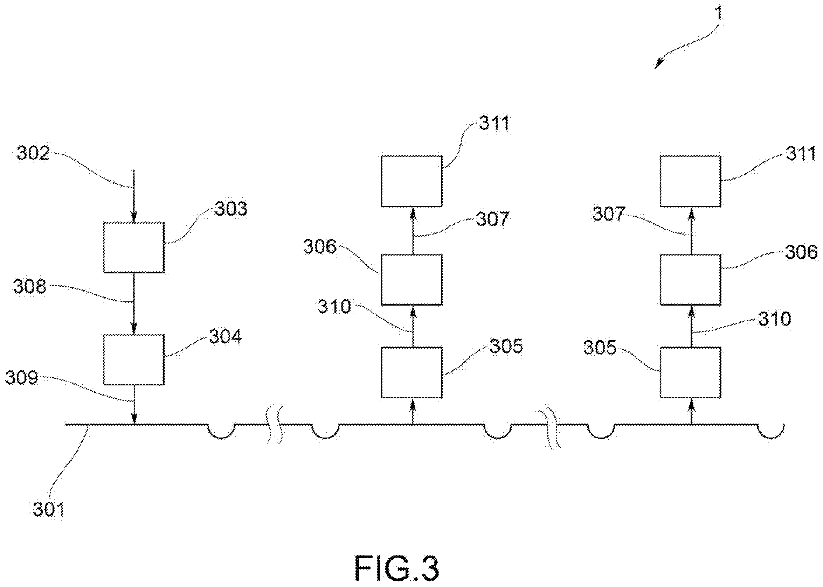

Referring initially to figure 3, an acoustic traction/braking control system for a train TC is illustrated, which includes a general brake line 301 and a master vehicle ML, which comprises traction and braking means, and at least one slave vehicle SL, which comprises traction and braking means.

The acoustic system for traction-braking transmission control 1 includes a modulator device 303 associated with the master vehicle ML. The modulator device 303 receives at least one traction or braking request signal 302 and generates an electrical signal 308 adapted to energize an actuator 304. The actuator 304 transforms said electrical signal 308 into a respective acoustic signal 309 to be transmitted inside said general brake pipe 301.

In other words, the modulator device 303 receives information to be transmitted and performs a suitable modulation thereof, as described hereinafter, subsequently driving an actuator 304 which transforms the electrical signal 308 into an acoustic signal 309. The acoustic signal 309 is then propagated along the brake pipe 301.

For example, the traction or braking request signals 302 may be generated by means of traction and braking commands given by an engine driver by means of a special command lever or by automatic traction or braking systems.

The frequency value of said acoustic signal 309 is adjusted according to the amplitude value of the traction or braking request signal 302, in accordance with a predetermined trans-characteristic function.

For example, but not necessarily, the curve of the trans-characteristic function presents a non-linear trend within the existence range thereof.

The acoustic traction/braking control system 1 according to the invention further comprises at least one transducer device 305, associated with said at least one slave vehicle SL, which detects the acoustic signal 309 and converts the instantaneous amplitude value of the acoustic signal 309 into an electrical signal 310 the frequency value of which is adjusted according to the frequency of the acoustic signal 309.

For example, the frequency of the electrical signal 310 coincides with the frequency of the acoustic signal 309.

Moreover, said acoustic traction/braking control system 1 includes at least one frequency demodulator 306 associated with said at least one slave vehicle SL, which generates a traction or braking management signal 307 the amplitude value of which is adjusted according to the frequency of the electrical signal 310. The traction or braking management signal 307 is transmitted by the frequency demodulator 306 to a traction and braking management system 311, associated with said at least one slave vehicle SL, for the management of traction and braking.

In other words, the transducer device 305, installed on one or more slave vehicles SL, may be an acoustic/electric transducer 305 arranged along said brake pipe 301 which transforms the acoustic signal received into an electrical signal 310 for frequency demodulators 306 charged with reconstructing the initial information and providing said information to a traction/braking management system 311.

If one intends to transmit information through the entire train, it is appropriate to use subsonic frequencies, as indicated in the cases "e", "f", "i" of figure 2.

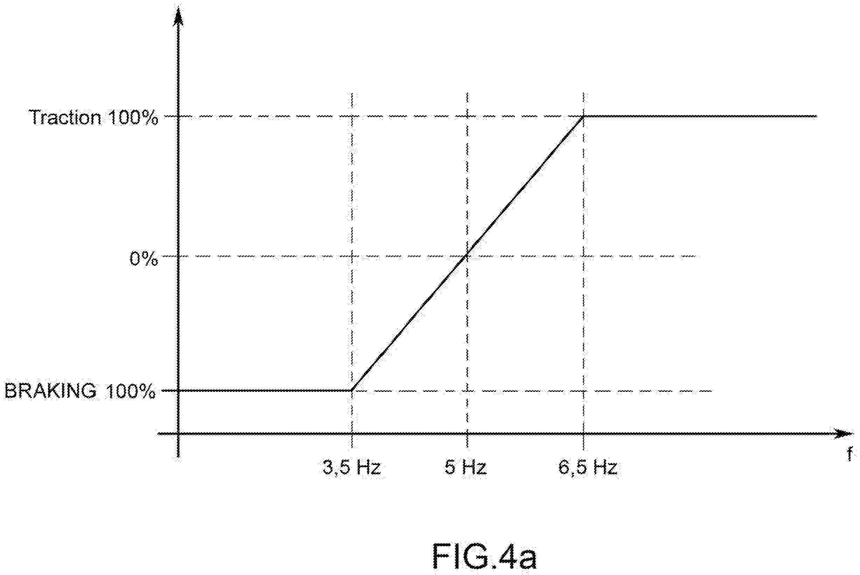

In such case, the most appropriate type of modulation is a modulation of a sinusoidal frequency, for example but not exclusively at 5Hz, in a limited range of modulation, for example but not exclusively +/- 1.5Hz. Such a limited range of modulation allows in practice to transmit only traction and braking commands, for example but not exclusively as shown in figure 4a.

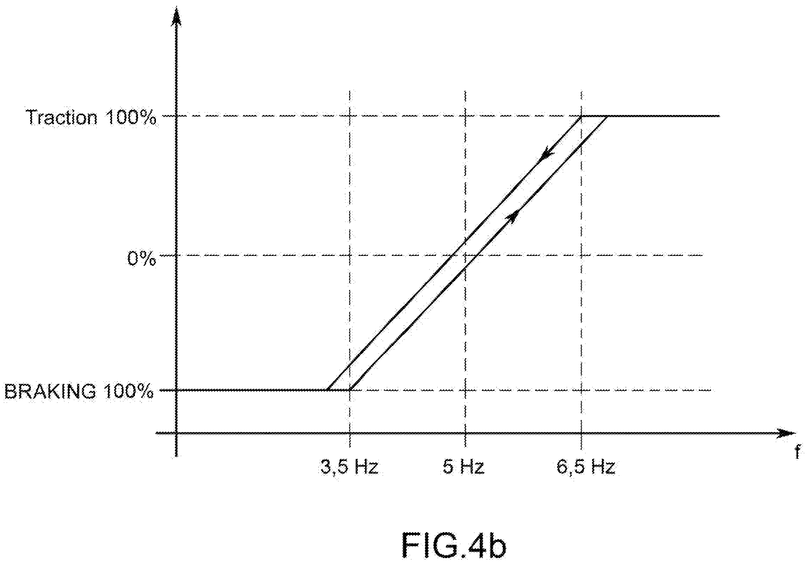

A frequency value equal to or less than 3.5Hz represents the maximum braking request value, including emergency braking. A frequency value equal to or greater than 6.5Hz represents the maximum traction request value. A variant is shown in figure 4b.

In order to make the system more insensitive to noise, a hysteresis may be inserted the value of which may be fixed or may be changed dynamically by the system according to the noise measured during operation. The curves of figures 4a and 4b have the advantage of guaranteeing the braking request in the case of a no-signal condition, that is, for example, in the case of cutting the pipe. Obviously other transfer functions may be realized according to the same principle, favoring a precise action in case of loss of the acoustic signal.

In the same way, discontinuous and/or non-linear functions may be achieved, creating areas with lower gain (higher resolution) and areas with greater gain (lower resolution).

Observing figure 2, in the case "a" it is possible to see how periodic amplitude peaks may occur when the frequency changes. This phenomenon, as known to those skilled in the art, is caused by the effect of the reflections along the transmission line if the line is properly balanced with said frequencies or not. In order to optimize the transmission frequency, the system may perform a calibration procedure of the central transmission frequency, with the help of the radio system of the "distributed power" system when such system is available. For example, during the initialization phase of the system, the modulator device 303 may perform a slow frequency variation within a predefined range generating respective calibration signals of predetermined amplitude, the frequency demodulators 306 will measure the amplitude trend of the signal received upon variation of the frequency generated by the modulator device 303, identifying the upper peaks. At the end of the procedure, the slave vehicle units SL will transmit each of the frequencies and amplitudes of the peaks detected to the master vehicle unit ML. Subsequently, the modulator device 303 will determine the most appropriate value at which to fix the central modulation frequency, for example, but not exclusively, by choosing the value corresponding to the maximum peak detected by the farthest frequency demodulator 306. At this point, the modulator device 303 will communicate to the various frequency demodulators 306, by means of the radio system, the central frequency value at which it will perform the frequency modulation actions.

The acoustic traction/braking control system for acoustic traction-braking transmission may be used as a backup system to a radio traction-braking transmission system, in case of damage or malfunction of the radio traction-braking transmission system.

An acoustic traction/braking control method is moreover described, which includes the steps of:
- receiving at least one traction or braking request signal 302 and generating, by means of a modulator device 303 associated with a master vehicle ML, an electrical signal 308 adapted to energize an actuator 304 provided to transform said electrical signal 308 into a respective acoustic signal 309;
- transmitting said acoustic signal 309 in said general brake pipe 301;
- adjusting the frequency value of said acoustic signal 309 according to the amplitude value of at least one traction or braking request signal 302, in accordance with a predetermined trans-characteristic function;
- detecting, by means of at least one transducer device 305 associated with at least one slave vehicle SL, the acoustic signal 309;
- converting, by means of said transducer device 305, the instantaneous amplitude value of the acoustic signal 309 into an electrical signal 310, of which the frequency value is adjusted according to the frequency of the acoustic signal 309;
- generating, by means of a frequency demodulator 306 associated with said at least one slave vehicle SL, a traction or braking management signal 307, the amplitude value of which being adjusted according to the frequency of the electrical signal 310;
- transmitting, by means of said frequency demodulator 306, the traction or braking management signal 307 to a traction and braking management system 311 associated with said at least one slave vehicle SL.

Various aspects and embodiments of an acoustic traction/braking control system of a train according to the invention have been described. It is understood that each embodiment may be combined with any other embodiment. The invention, moreover, is not limited to the described embodiments, but may vary within the scope defined by the accompanying claims.

## Claims

1. An acoustic traction/braking control system (1) for a train (TC) comprising a general brake pipe (301), a master vehicle (ML) comprising traction and braking means, and at least one slave vehicle (SL) comprising traction and braking means; said acoustic traction/braking control system (1) including:
- a modulator device (303) associated with said master vehicle (ML), which is arranged to receive at least one traction or braking request signal (302) and generate an electrical signal (308) adapted to energize an actuator (304) arranged to transform said electrical signal (308) into a respective acoustic signal (309) to be transmitted within said general brake pipe (301);
the frequency value of said acoustic signal (309) being adjusted according to the value of the amplitude of the at least one traction or braking request signal (302), in accordance with a predetermined trans-characteristic function;
- at least one transducer device (305) associated with said at least one slave vehicle (SL), which is adapted to detect the acoustic signal (309) and to convert the instantaneous amplitude value of the acoustic signal (309) into an electrical signal (310) the frequency value of which is adjusted according to the frequency of the acoustic signal (309);
- at least one frequency demodulator (306) associated with said at least one slave vehicle (SL), which is arranged to generate a traction or braking management signal (307) whose amplitude value is adjusted according to the frequency of the electrical signal (310); the traction or braking management signal (307) being transmitted by the frequency demodulator (306) to a traction and braking management system (311) associated with said at least one slave vehicle (SL), which is arranged for traction and braking management.

2. An acoustic traction/braking control system (1) according to claim 1, wherein a frequency value of said acoustic signal (309) corresponds to a braking request value identifying an emergency braking request.

3. An acoustic traction/braking control system (1) according to any of the preceding claims, wherein said trans-characteristic curve comprises a hysteresis.

4. An acoustic traction/braking control system (1) according to any of the preceding claims, wherein the curve of the trans-characteristic function has a nonlinear behavior within its range of existence.

5. An acoustic traction/braking control system (1) according to any of the preceding claims, wherein said acoustic traction/braking control system (1) is used as a backup system to a radio traction-braking transmission system.

6. An acoustic traction/braking control system (1) according to any of the preceding claims, comprising an auto-calibration function capable of detecting and setting a central frequency value in accordance with the maximum value detected by at least one frequency demodulator device (306) arranged to measure the amplitude behavior of the received signal at the varying of the frequency generated by the device (303).

7. An acoustic traction/braking control method comprising the steps of:
- receiving at least one traction or braking request signal (302) and generating, by means of a modulator device (303) associated with a master vehicle (ML), an electrical signal (308) adapted to energize an actuator (304) arranged to transform said electrical signal (308) into a respective acoustic signal (309);
- transmitting said acoustic signal (309) within said general brake pipe (301);
- adjusting the frequency value of said acoustic signal (309) according to the amplitude value of the traction or braking request signal (302), in accordance with a predetermined trans-characteristic function;
- detecting, by means of a transducer device (305) associated with at least one slave vehicle (SL), the acoustic signal (309);
- converting the instantaneous amplitude value of the acoustic signal (309) into an electrical signal (310) through said transducer device (305), the frequency value of the electrical signal (310) being adjusted according to the frequency of the acoustic signal (309);
- generating, by means of a frequency demodulator (306) associated with said at least one slave vehicle (SL), a traction or braking management signal (307) whose amplitude value is adjusted according to the frequency of the electrical signal (310);
- transmitting, by means of said frequency demodulator (306), the traction or braking management signal (307) to a traction and braking management system (311) associated with said at least one slave vehicle (SL).

## Patentansprüche

1. Akustisches Antriebs-/Bremssteuerungssystem (1) für einen Zug (TC), der ein allgemeines Bremsrohr (301), ein Hauptfahrzeug (ML), das Antriebs- und Bremsmittel aufweist, und mindestens ein untergeordnetes Fahrzeug (SL), das Antriebs- und Bremsmittel aufweist, aufweist; welches besagte akustische Antriebs-/Bremssteuerungssystem (1) aufweist:
- eine Modulatorvorrichtung (303), die mit besagtem Hauptfahrzeug (ML) assoziiert ist, die so angeordnet ist, dass sie mindestens ein Antriebs- oder Bremsanforderungssignal (302) empfängt und ein elektrisches Signal (308) erzeugt, das dazu angepasst ist, einen Aktuator (304), der so angeordnet ist, dass er besagtes elektrische Signal (308) in ein jeweiliges akustisches Signal (309) umwandelt, das innerhalb besagten allgemeinen Bremsrohrs (301) zu übertragen ist, anzusteuern;
bei der der Frequenzwert besagten akustischen Signals (309) gemäß dem Wert der Amplitude des mindestens einen Antriebs- oder Bremsanforderungssignals (302) entsprechend einer vorbestimmten transcharakteristischen Funktion angepasst wird;
- mindestens eine Wandlervorrichtung (305), die mit besagtem mindestens einen untergeordneten Fahrzeug (SL) assoziiert ist, die dazu angepasst ist, das akustisches Signal (309) zu erfassen und den momentanen Amplitudenwert des akustischen Signals (309) in ein elektrisches Signal (310), dessen Frequenzwert gemäß der Frequenz des akustischen Signals (309) angepasst wird, umzuwandeln;
- mindestens einen Frequenzdemodulator (306), der mit besagtem mindestens einen untergeordneten Fahrzeug (SL) assoziiert ist, der so angeordnet ist, dass er ein Antriebs- oder Bremsverwaltungssignal (307), dessen Amplitudenwert gemäß der Frequenz des elektrischen Signals (310) angepasst wird, erzeugt; welches Antriebs- oder Bremsverwaltungssignal (307) durch den Frequenzdemodulator (306) an ein Antriebs- und Bremsverwaltungssystem (311), das mit besagtem mindestens einen untergeordneten Fahrzeug (SL) assoziiert ist, das für Antriebs- und Bremsverwaltung angeordnet ist, übertragen wird.

2. Akustisches Antriebs-/Bremssteuerungssystem (1) nach Anspruch 1, bei dem ein Frequenzwert besagten akustischen Signals (309) einem Bremsanforderungswert, der eine Notbremsanforderung identifiziert, entspricht.

3. Akustisches Antriebs-/Bremssteuerungssystem (1) nach einem der vorhergehenden Ansprüche, bei dem besagte transcharakteristische Kurve eine Hysterese aufweist.

4. Akustisches Antriebs-/Bremssteuerungssystem (1) nach einem der vorhergehenden Ansprüche, bei dem die Kurve der transcharakteristischen Funktion ein nichtlineares Verhalten innerhalb ihres Existenzbereichs aufweist.

5. Akustisches Antriebs-/Bremssteuerungssystem (1) nach einem der vorhergehenden Ansprüche, bei dem besagtes akustisches Antriebs-/Bremssteuerungssystem (1) als ein Sicherungssystem für ein Funk-Antriebs-Bremsübertragungssystem verwendet wird.

6. Akustisches Antriebs-/Bremssteuerungssystem (1) nach einem der vorhergehenden Ansprüche, das eine Auto-Kalibrationsfunktion aufweist, die imstande ist, einen zentralen Frequenzwert entsprechend dem Maximalwert, der durch mindestens eine Frequenzdemodulatorvorrichtung (306) erfasst wird, die so angeordnet ist, dass sie das Amplitudenverhalten des empfangenen Signals bei dem Variieren der Frequenz, die durch die Vorrichtung (303) erzeugt wird, misst, zu erfassen und festzulegen.

7. Akustisches Antriebs-/Bremssteuerungsverfahren mit den Schritten:
- Empfangen mindestens eines Antriebs- oder Bremsanforderungssignals (302) und Erzeugen, mittels einer Modulatorvorrichtung (303), die mit einem Hauptfahrzeug (ML) assoziiert ist, eines elektrischen Signals (308), das dazu angepasst ist, einen Aktuator (304), der so angeordnet ist, dass er besagtes elektrische Signal (308) in ein jeweiliges akustisches Signal (309) umwandelt, anzusteuern;
- Übertragen besagten akustischen Signals (309) innerhalb besagten allgemeinen Bremsrohrs (301);
- Anpassen des Frequenzwerts besagten akustischen Signals (309) gemäß dem Amplitudenwert des Antriebs- oder Bremsanforderungssignals (302) entsprechend einer vorbestimmten transcharakteristischen Funktion;
- Erfassen, mittels einer Wandlervorrichtung (305), die mit mindestens einem untergeordneten Fahrzeug (SL) assoziiert ist, des akustischen Signals (309);
- Umwandeln des momentanen Amplitudenwerts des akustischen Signals (309) in ein elektrisches Signal (310) durch besagte Wandlervorrichtung (305), bei dem der Frequenzwert des elektrischen Signals (310) gemäß der Frequenz des akustischen Signals (309) angepasst wird;
- Erzeugen, mittels eines Frequenzdemodulators (306), der mit besagtem mindestens einen untergeordneten Fahrzeug (SL) assoziiert ist, eines Antriebs- oder Bremsverwaltungssignals (307), dessen Amplitudenwert gemäß der Frequenz des elektrischen Signals (310) angepasst wird;
- Übertragen, mittels besagten Frequenzdemodulators (306), des Antriebs-oder Bremsverwaltungssignals (307) an ein Antriebs- und Bremsverwaltungssystem (311), das mit besagtem mindestens einen untergeordneten Fahrzeug (SL) assoziiert ist.

## Revendications

1. Système de commande de traction/freinage acoustique (1) pour un train (TC) comprenant une conduite de frein générale (301), un véhicule maître (ML) comprenant des moyens de traction et de freinage, et au moins un véhicule esclave (SL) comprenant des moyens de traction et de freinage ; ledit système de commande de traction/freinage acoustique (1) incluant :
- un dispositif (303) modulateur associé audit véhicule maître (ML), qui est agencé pour recevoir au moins un signal de demande de traction ou de freinage (302) et générer un signal électrique (308) adapté pour alimenter un actionneur (304) agencé pour transformer ledit signal électrique (308) en un signal acoustique (309) respectif devant être transmis dans ladite conduite de frein générale (301) ;
la valeur de fréquence dudit signal acoustique (309) étant ajustée selon la valeur de l'amplitude de l'au moins un signal de demande de traction ou de freinage (302), conformément à une fonction trans-caractéristique prédéterminée ;
- au moins un dispositif transducteur (305) associé audit au moins un véhicule esclave (SL), qui est adapté pour détecter le signal acoustique (309) et pour convertir la valeur d'amplitude instantanée du signal acoustique (309) en un signal électrique (310) dont la valeur de fréquence est ajustée selon la fréquence du signal acoustique (309) ;
- au moins un démodulateur de fréquence (306) associé audit au moins un véhicule esclave (SL), qui est agencé pour générer un signal de gestion de traction ou de freinage (307) dont la valeur d'amplitude est ajustée selon la fréquence du signal électrique (310) ; le signal de gestion de traction ou de freinage (307) étant transmis par le démodulateur de fréquence (306) à un système de gestion de traction et de freinage (311) associé audit au moins un véhicule esclave (SL), qui est agencé pour une gestion de traction et de freinage.

2. Système de commande de traction/freinage acoustique (1) selon la revendication 1, dans lequel une valeur de fréquence dudit signal acoustique (309) correspond à une valeur de demande de freinage identifiant une demande de freinage d'urgence.

3. Système de commande de traction/freinage acoustique (1) selon l'une quelconque des revendications précédentes, dans lequel ladite courbe trans-caractéristique comprend une hystérésis.

4. Système de commande de traction/freinage acoustique (1) selon l'une quelconque des revendications précédentes, dans lequel la courbe de la fonction trans-caractéristique a un comportement non linéaire dans sa plage d'existence.

5. Système de commande de traction/freinage acoustique (1) selon l'une quelconque des revendications précédentes, dans lequel ledit système de commande de traction/freinage acoustique (1) est utilisé comme un système de secours pour un système radio de transmission de traction/freinage.

6. Système de commande de traction/freinage acoustique (1) selon l'une quelconque des revendications précédentes, comprenant une fonction d'autocalibrage capable de détecter et régler une valeur de fréquence centrale conformément à la valeur maximale détectée par au moins un dispositif démodulateur de fréquence (306) agencé pour mesurer le comportement en amplitude du signal reçu au niveau de la variation de la fréquence générée par le dispositif (303).

7. Procédé de commande de traction/freinage acoustique comprenant les étapes consistant à :
- recevoir au moins un signal de demande de traction ou de freinage (302) et générer, au moyen d'un dispositif (303) modulateur associé à un véhicule maître (ML), un signal électrique (308) adapté pour alimenter un actionneur (304) agencé pour transformer ledit signal électrique (308) en un signal acoustique (309) respectif ;
- transmettre ledit signal acoustique (309) dans ladite conduite de frein générale (301) ;
- ajuster la valeur de fréquence dudit signal acoustique (309) selon la valeur d'amplitude du signal de demande de traction ou de freinage (302), conformément à une fonction trans-caractéristique prédéterminée ;
- détecter, au moyen d'un dispositif transducteur (305) associé à au moins un véhicule esclave (SL), le signal acoustique (309) ;
- convertir la valeur d'amplitude instantanée du signal acoustique (309) en un signal électrique (310) par l'intermédiaire dudit dispositif transducteur (305), la valeur de fréquence du signal électrique (310) étant ajustée selon la fréquence du signal acoustique (309) ;
- générer, au moyen d'un démodulateur de fréquence (306) associé audit au moins un véhicule esclave (SL), un signal de gestion de traction ou de freinage (307) dont la valeur d'amplitude est ajustée selon la fréquence du signal électrique (310) ;
- transmettre, au moyen dudit démodulateur de fréquence (306), le signal de gestion de traction ou de freinage (307) à un système de gestion de traction et de freinage (311) associé audit au moins un véhicule esclave (SL).
